Europäisches Patentamt

European Patent Office

Office européen des brevets

(19)

(11) Veröffentlichungsnummer : **0 037 073**
**B1**

(12) **EUROPÄISCHE PATENTSCHRIFT**

(45) Veröffentlichungstag der Patentschrift :
20.08.86

(51) Int. Cl.⁴ : **G 01 B 11/27**

(21) Anmeldenummer : **81102248.2**

(22) Anmeldetag : **25.03.81**

(54) **Vorrichtung zum Zentrieren für die Herstellung eines Mittellochs in Platten.**

(30) Priorität : **31.03.80 DE 3012433**

(43) Veröffentlichungstag der Anmeldung :
**07.10.81 Patentblatt 81/40**

(45) Bekanntmachung des Hinweises auf die Patenterteilung : **20.08.86 Patentblatt 86/34**

(84) Benannte Vertragsstaaten :
**AT BE CH FR GB IT LI LU NL SE**

(56) Entgegenhaltungen :
**DE-A- 2 800 618**
**DE-B- 2 538 383**
**US-A- 3 740 152**
**US-A- 4 012 148**
**US-A- 4 112 309**
**MACHINE DESIGN, Band 50, Nr. 3, 9. Februar 1978,**
**Seite 41, Cleveland, USA, " 'Smart' press punches**
**holes on target"**
**APPLIED OPTICS, Band 18, Nr. 3, 1. Februar 1979,**
**Seiten 331-334, New York, USA, R.W. LEWIS: "Align-**
**ment of micro-circuit chips using optically smeared**
**images"**
**RCA REVIEW, Band 39, Nr. 1, März 1978, Seiten 162-**
**185, Princeton, n.J., USA, I. GOROG: "Optical techni-**
**ques developed for the RCA VideoDisc"**

(73) Patentinhaber : **POLYGRAM GmbH**
**Harvestehuder Weg 1-4**
**D-2000 Hamburg 13 (DE)**

(72) Erfinder : **Ahrens, Harald, Dr. Dipl.-Phys.**
**Dopmeyer Hof 3**
**D-3000 Hannover 51 (DE)**
Erfinder : **Schulz, Dieter, Dipl.-Ing.**
**Seydlitzstrasse 4**
**D-3000 Hannover 1 (DE)**

(74) Vertreter : **Meier, Friedrich, Dipl.-Ing. et al**
**Billstrasse 80 Postfach 10 51 49**
**D-2000 Hamburg 28 (DE)**

## Beschreibung

Die Erfindung betrifft eine Vorrichtung zum Zentrieren für die Herstellung eines Mittellochs in Platten, insbesondere metallisierten Videoplatten, mit einem beispielsweise spiralförmige Informationsspuren enthaltenden Informationsteil und einem informationsfreien Teil, mit einem Meßkopf zur Abgabe eines Lichtstrahls auf die x-y-Plattenebene und zum Empfang der unter Ausnutzung der Lichtbeugung an den Informationsspuren von einem Detektor aufgefangenen Strahlung, wobei der Meßkopf und die zu zentrierende Platte relativ in zueinander parallelen Ebenen verschiebbar sind.

Optisch abgetastete Videoplatten, die mit einer Geschwindigkeit von 1 500 bis 1 800 Umdrehungen pro Minute rotieren, weisen ein Mittelloch auf, in das eine Welle zur Drehung während des Abspielvorganges eingesetzt ist. Befindet sich das Mittelloch nicht genau im Zentrum der Platte, so wird dadurch eine Exzentrizität der Informationsspuren gegenüber der Rotationsachse bewirkt. Geringe Exzentrizitätsbeträge, die kleiner als 50 µm sind, können von der Abspielvorrichtung ausgeglichen werden. Größere Exzentrizitäten können das Korrekturvermögen der Abspielvorrichtung übersteigen und demzufolge die Abspielbarkeit beeinträchtigen.

Aufgrund der hohen Anforderungen hinsichtlich einer geringen Exzentrizität ist bei der Herstellung und Vervielfältigung der Platten eine Pressung des Mittellochs im gleichen Arbeitsgang nicht möglich. Das Mittelloch muß daher in einem zusätzlichen Arbeitsgang hergestellt werden. Hierzu ist eine Vorrichtung zum Zentrieren der Platten mit hoher Genauigkeit erforderlich.

Aus der DE-AS-25 38 383 ist ein Verfahren und eine Vorrichtung zur Lokalisierung des Zentrums einer kreisförmigen Videoplatte bekannt. Hierbei sind eine Lichtquelle zur Abgabe eines Lichtstrahles auf die Oberfläche der zu zentrierenden Platte und ein Lichtempfänger zur Aufnahme des von den Informationsspuren auf der Platte gebeugten Lichtstrahles vorgesehen, wobei der Lichtempfänger in der optischen Achse der Lichtquelle angeordnet ist. In der senkrecht zu dieser optischen Achse befindlichen Plattenebene wird die Videoplatte solange bewegt, bis der Lichtempfänger ein Beugungsmaximum anzeigt. Aus diesem Kriterium läßt sich die Lokalisierung des Zentrums in der Weise bestimmen, daß sich bei einem Beugungsmaximum im Lichtempfänger das Zentrum der Informationsspuren genau auf der optischen Achse befindet.

Doch versagt dieses bekannte Verfahren, wenn die zu zentrierende Platte Randeffekte aufweist, da in diesem Fall durch den im Randbereich der Platte auftreffenden Lichtstrahl die Messung des Beugungsmaximums verfälscht wird.

Der Erfindung liegt die Aufgabe zugrunde, den vorerwähnten Nachteil zu beseitigen und eine weitere Lösung zum Zentrieren von Platten anzugeben, bei der die Beugungsgittereigenschaft der Informationsspuren ausgenutzt wird.

Diese Aufgabe wird erfindungsgemäß dadurch gelöst, daß der von dem Meßkopf abgegebene Lichtstrahl senkrecht auf die Oberfläche der Platte gerichtet und dort fokussiert ist, daß die Platte zur Ausführung einer Rotationsbewegung in der x-y-Plattenebene drehbar gelagert ist, daß der Meßkopf relativ und in radialer Richtung zur Platte derart translatorisch verstellbar ist, daß sich der Lichtstrahl während einer vollen Plattenumdrehung auf der Grenze zwischen Informationsteil und informationsfreiem Teil befindet und daß die Platte zur Bestimmung ihres Zentrums in Abhängigkeit von der vom Detektor aufgefangenen Strahlung in der x-y-Plattenebene nachsteuerbar ist.

Weiterhin ist es vorteilhaft, daß eine von dem Detektor angesteuerte elektronische Steuerschaltung vorgesehen ist, die während der vollen Plattenumdrehung ein Steuersignal an einen Meßkopfantrieb zur Bewegung des Meßkopfes abgibt, daß das Steuersignal einem Speicher zuführbar ist und nach der vollen Plattenumdrehung die genannte Bewegung der Platte über einen Meßumformer nachsteuert.

Weitere vorteilhafte Ausgestaltungen der Erfindung sind in den Ansprüchen 3 bis 6 angegeben.

Der mit der Erfindung erzielte Vorteil besteht insbesondere in der hohen Meßgenauigkeit zur Bestimmung des Zentrums, und zwar unabhängig von Ungenauigkeiten des Plattenrandes. Dadurch wird gewährleistet, daß das Mittelloch stets genau an der hierfür vorgesehenen Stelle ausgestanzt wird.

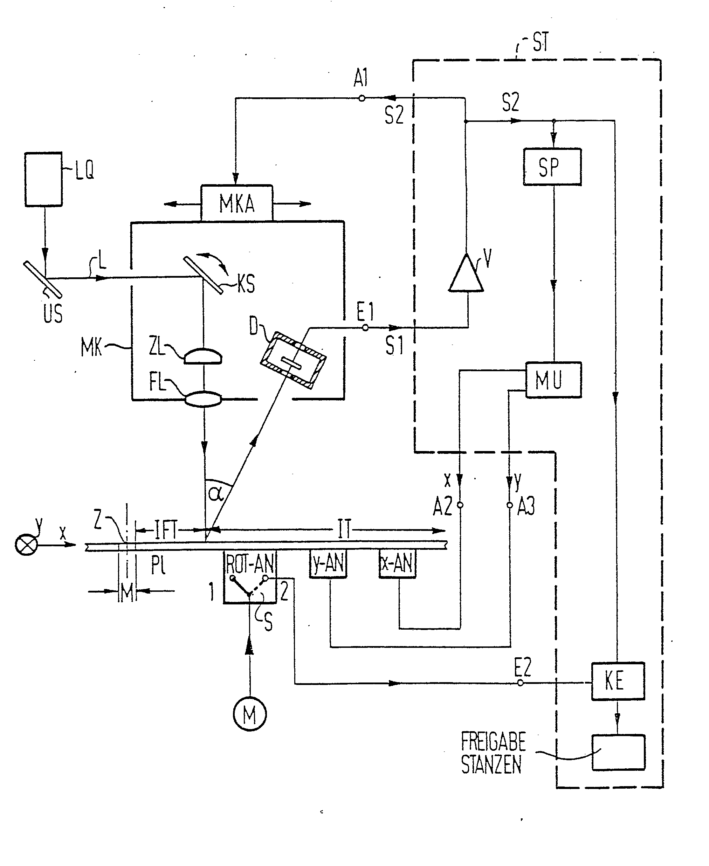

Ein Ausführungsbeispiel der Erfindung ist in der Zeichnung dargestellt und wird im folgenden näher beschrieben.

Die in der Figur dargestellte Anordnung zeigt eine Lichtquelle LQ, die einen Lichtstrahl, vorzugsweise einen Laserstrahl L abgibt. Der Laserstrahl L gelangt über einen Umlenkspiegel US zu dem Meßkopf MK, der in dem optischen Wege des Laserstrahles L einen Kippspiegel KS und ein Linsensystem aufweist. Das Linsensystem besteht aus einer Fokussierlinse FL, um den Laserstrahl L in senkrechter Strahlrichtung auf die Oberfläche der zu zentrierenden Platte Pl zu fokussieren und aus einer Zylinderlinse ZL, durch die der Laserstrahl L in Form eines Striches fokussiert wird. Die Strichfokussierung wird durchgeführt, um die Vorrichtung unempfindlich gegen Störungen durch Staub und Oberflächenbeschädigungen an der Platte zu machen. Der zur Erleichterung der Auswertung vorgesehene Kippspiegel KS schwingt mit einer relativ niederen Frequenz, so daß der Lichtfleck um ca. 200-300 µ in radialer Richtung auf der Platte Pl hin und her bewegt wird.

Weiterhin weist der Meßkopf MK einen Detektor D auf, der zum optimalen Empfang der Strahlung in Richtung einer Beugungsordnung der als Beugungsgitter wirkenden Informationsspuren angeordnet ist.

Der von dem Meßkopf MK abgegebene Laserstrahl L wird nur dann gebeugt, wenn er auf dem mit Informationsspuren versehenen Informationsteil IT der Platte PI auftrifft. Bei Auftreffen auf dem informationsfreien Teil IFT wird er dagegen nicht gebeugt, so daß in diesem Fall der Detektor D auch keine Strahlung empfangen kann. Zu Beginn des Meßvorgangs wird der Meßkopf MK und damit der auf der Platte PI fokussierte Laserstrahl L — vom informationsfreien Teil IFT aus beginnend — in radialer Richtung zur Platte PI bis zum Beginn des Informationsteiles IT bewegt. Ist der Beginn des Informationsteiles IT gefunden, so wird die Bewegung des Meßkopfes MK in der Weise gesteuert, daß sich der fokussierte Laserstrahl L während einer vollen Plattenumdrehung genau auf der Grenze zwischen Informationsteil IT und informationsfreiem Teil IFT befindet. Zur Steuerung der Bewegung des Meßkopfes MK ist eine von dem Detektor D mit dem Signal S1 angesteuerte elektronische Steuerschaltung ST vorgesehen. Das Signal S1 am Eingang E1 der elektronischen Steuerschaltung ST wird über den Verstärker V in das Signal S2 umgewandelt, das über den Ausgang A1 der elektronischen Steuerschaltung ST zu dem Meßkopfantrieb MKA gelangt, so daß der fokussierte Laserstrahl L während einer vollen Plattenumdrehung auf der Grenze zwischen Informationsteil IT und informationsfreiem Teil IFT gehalten wird.

Die während einer vollen Plattenumdrehung an den Meßkopfantrieb MKA abgegebenen Steuersignale S2 werden gleichzeitig in einem Speicher SP gespeichert. In einem dem Speicher SP nachgeschalteten Meßumformer MU werden die Steuersignale S2 nach dem Plattenumlauf in Steuerbefehle zur Nachsteuerung der für die Zentrierung notwendigen translatorischen Bewegung der Platte PI in der x-y-Plattenebene umgewandelt. Dabei wird über den Ausgang A2 der elektronischen Steuerschaltung ST der Antrieb x-An für die Bewegung der Platte PI in x-Richtung und über den Ausgang A3 der Antrieb y-An für die Bewegung in y-Richtung gesteuert.

Der von dem Motor M gesteuerte Rotationsantrieb ROT-AN für die Platte PI weist einen Schalter S zur Einstellung der Drehrichtung auf. In Schaltstellung 1 führt die Platte PI die bei der Einstellung des fokussierten Laserstrahles auf die Grenze zwischen Informationsteil IT und informationsfreiem Teil IFT erforderliche volle Umdrehung z. B. im Uhrzeigersinn aus. In Schaltstellung 2 wird die Platte PI zur Überprüfung der Zentrierung in umgekehrter Drehrichtung wieder in die Ausgangsstellung gebracht. Das bei diesem Rücklauf gemessene Signal wird über den Eingang E2 der elektronischen Steuerschaltung ST einer Kontrolleinrichtung KE zugeführt, die bei Lage des Zentrums Z innerhalb einstellbarer Toleranzgrenzen das Ausstanzen des Mittelloches M freigibt.

Die Stanzeinrichtung selbst ist in der Zeichnung nicht dargestellt.

## Patentansprüche

1. Vorrichtung zum Zentrieren für die Herstellung eines Mittellochs in Platten, insbesondere metallisierten Videoplatten, mit einem beispielsweise spiralförmige Informationsspuren enthaltenden Informationsteil (IT) und einem informationsfreien Teil (IFT), mit einem Meßkopf (MK) zur Abgabe eines Lichtstrahls (L) auf die x-y-Plattenebene und zum Empfang der unter Ausnutzung der Lichtbeugung an den Informationsspuren von einem Detektor (D) aufgefangenen Strahlung, wobei der Meßkopf (MK) und die zu zentrierende Platte (PI) relativ in zueinander parallelen Ebenen verschiebbar sind, dadurch gekennzeichnet, daß der von dem Meßkopf (MK) abgegebene Lichtstrahl (L) senkrecht auf die Oberfläche der Platte (PI) gerichtet und dort fokussiert ist, daß die Platte zur Ausführung einer Rotationsbewegung in der x-y-Plattenebene drehbar gelagert ist, daß der Meßkopf relativ und in radialer Richtung zur Platte (PI) derart translatorisch verstellbar ist, daß sich der Lichtstrahl (L) während einer vollen Plattenumdrehung auf der Grenze zwischen Informationsteil (IT) und informationsfreiem Teil (IFT) befindet und daß die Platte (PI) zur Bestimmung ihres Zentrums (Z) in Abhängigkeit von der vom Detektor (D) aufgefangenen Strahlung in der x-y-Plattenebene nachsteuerbar ist.

2. Vorrichtung nach Anspruch 1, dadurch gekennzeichnet, daß eine von dem Detektor (D) angesteuerte elektronische Steuerschaltung (ST) vorgesehen ist, die während der vollen Plattenumdrehung ein Steuersignal (S2) an einen Meßkopfantrieb (MKA) zur Bewegung des Meßkopfes (MK) abgibt, daß das Steuersignal einem Speicher (SP) zuführbar ist und nach der vollen Plattenumdrehung die genannte Bewegung der Platte (PI) über einen Meßumformer (MU) nachsteuert.

3. Vorrichtung nach einem der vorhergehenden Ansprüche, dadurch gekennzeichnet, daß zur Überprüfung der Zentrierung eine Kontrolleinrichtung (KE) vorgesehen ist, die bei Lage des Zentrums (Z) innerhalb einstellbarer Toleranzgrenzen das Ausstanzen des Mittelloches (M) freigibt.

4. Vorrichtung nach einem der vorhergehenden Ansprüche, dadurch gekennzeichnet, daß der Lichtstrahl (L) mittels einer Zylinderlinsenoptik (ZL) in Form eines Striches auf der Oberfläche der Platte (PI) fokussiert ist.

5. Vorrichtung nach einem der vorhergehenden Ansprüche, dadurch gekennzeichnet, daß im Strahlengang des Lichtstrahls (L) der Optik des Meßkopfes (MK) ein Kippspiegel (KS) angeordnet ist, der um seine in einer zur x-y-Plattenebene parallelen Ebene vorhandene Kippachse zu einer Schwingbewegung anregbar ist.

6. Vorrichtung nach einem der vorhergehenden Ansprüche, dadurch gekennzeichnet, daß der Detektor (D) zum optimalen Empfang der Strahlung in Richtung einer ein Intensitätsmaximum anzeigenden Beugungsordnung der als Beugungsgitter wirkenden Informationsspuren angeordnet ist.

## Claims

1. A device for centring a record disc in which a centre hole is to be made, in particular a metallised video disc with an information part (IT) comprising, for example, spiral information tracks, and with an information-free part (IFT), which device comprises a measuring head (MK) for emitting a light beam (L) towards the x-y disc plane and for receiving the radiation diffracted by the information tracks on a detector (D), the measuring head (MK) and the disc to be centred (PI) being movable relative to each other in mutually parallel planes, characterized in that the light beam (L) issuing from the measuring head (MK) is directed perpendicularly to and is focussed on the surfaces of the disc (P1), in that the disc is rotatably supported for a rotary movement in the x-y disc plane, in that the measuring head can be translated radially relative to the disc (P1) in such a way that during a complete revolution of the disc the light beam (L) is situated at the boundary between the information part (IT) and the information-free part (IFT), and in that disc (P1) can be re-positioned in the x-y disc plane depending on the radiation received by the detector (D) to determine its centre (Z).

2. A device as claimed in Claim 1, characterised in that there is provided an electronic control circuit (ST), which is controlled by the detector (D) and which during the entire revolution of the disc supplies a control signal (S2) to a measuring head drive (MKA) to move the measuring head (MK), in that the control signal can be applied to a memory (SP) to correct said movement of the disc (P1) via a transducer (MU) after the complete revolution of the disc.

3. A device as claimed in any one of the preceding Claims, characterized in that there is provided a monituring device (KE) for checking the centring, which device enables the centre hole (M) to be formed when the centre (Z) is situated within adjustable tolerance limits.

4. A device as claimed in any one of the preceding Claims, characterized in that the light beam (L) is focussed by a cylindricallens system (ZL) to form a line on the surface of the disc (P1).

5. A device as claimed in any one of the preceding Claims, characterized in that a tilting mirror (KS) is arranged in the radiation path of the light beam (L) of the optical system of the measuring head (MK), which mirror can be actuated to oscillate about its tilting axis in a plane parallel to the S-Y displane.

6. A device as claimed in any one of the preceding Claims, characterized in that for an optimum reception of the radiation the detector (D) is directed towards a diffraction order of the information tracks which act as a diffraction grating, which diffraction order indicates an intensity maximum.

## Revendications

1. Dispositif de centrage pour la formation d'un trou central dans des disques, en particulier des vidéodisques métallisés comportant une partie à information (IT) contenant par exemple des pistes d'information spiralées, et une partie sans information (IFT), une tête de mesure (MK) pour projeter un rayon lumineux (L) sur le plan x-y du disque et pour recevoir le rayonnement capté par un détecteur (D) après diffraction de la lumière au niveau des pistes d'information, la tête de mesure (MK) et le disque à centrer (P1) pouvant être déplacés l'un par rapport à l'autre dans des plans parallèles, caractérisé en ce que le rayon lumineux émis par la tête de mesure (MK) est dirigé perpendiculairement sur la surface du disque (P1) et y est focalisé, le disque est monté tournant pour effectuer un mouvement de rotation dans son plan x-y, la tête de mesure est montée déplaçable en un mouvement de translation par rapport au disque (P1) et dans un sens radial à l'égard de celui-ci de telle sorte que le rayon lumineux (L), pendant une révolution complète du disque, se trouve sur la frontière entre la partie à information (IT) et la partie sans information (IFT) et que le disque (P1), en vue de la détermination de son centre (Z) peut être asservi dans son plan x-y en fonction du rayonnement capté par le détecteur (T).

2. Dispositif suivant la revendication 1, caractérisé en ce qu'un circuit de commande électronique (ST) piloté par le détecteur (D) est prévu et, pendant la révolution complète du disque, il envoie un signal de commande (S2) à un dispositif d'entraînement de tête de mesure (MKA) pour déplacer cette tête de mesure (MK), le signal de commande peut être appliqué à une mémoire (ST) et, au terme de la révolution complète du disque, ledit déplacement du disque (P1) est asservi par l'intermédiaire d'un convertisseur de mesure (MU).

3. Dispositif suivant l'une ou l'autre des revendications précédentes, caractérisé en ce qu'un dispositif de contrôle (KE) est prévu pour vérifier le centrage et ce dispositif autorise l'estampage du trou central (M) lorsque le centre (Z) est disposé entre des limites de tolérances réglables.

4. Dispositif suivant l'une quelconque des revendications précédentes, caractérisé en ce que le rayon lumineux (L) est focalisé au moyen d'une optique à lentille cylindrique (ZL) sous la forme d'une ligne sur la surface du disque (P1).

5. Dispositif suivant l'une quelconque des revendications précédentes, caractérisé en ce que dans le trajet du rayon lumineux (L) de l'optique de la tête de mesure (MK) est disposé un miroir basculant (KS) qui peut être mû de manière à osciller autour de son axe de basculement présent dans un plan parallèle au plan x-y du disque.

6. Dispositif suivant l'une quelconque des revendications précédentes, caractérisé en ce que le détecteur (D) est monté, en vue de la réception optimale du rayonnement, dans la direction d'un ordre de diffraction, indiquant une intensité maximum, des pistes d'information se comportant comme un réseau de diffraction.